# EUROPÄISCHE PATENTSCHRIFT

(11) **EP 1 092 689 B1**
(45) Veröffentlichungstag und Bekanntmachung des Hinweises auf die Patenterteilung: **16.12.2009**
(21) Anmeldenummer: 00119591.6
(22) Anmeldetag: 07.09.2000
(51) Int. Cl.: C03C 17/36

(54) **Leitende transparente Schichten und Verfahren zu ihrer Herstellung**
Conducting transparent coatings and method for their production
Couches transparents et électroconductives et procédé pour leur déposition

(30) Priorität: 11.10.1999 DE 19948839
(43) Veröffentlichungstag der Anmeldung: 18.04.2001
(73) Patentinhaber: Applied Materials GmbH & Co. KG, 63755 Alzenau (DE)
(72) Erfinder: Stollenwerk, Johannes, Prof. Dr., 51503 Rösrath (DE); Köppel, Andreas, 63695 Glauburg (DE); Bender, Marcus, 35606 Solms (DE)
(74) Vertreter: Bockhorni & Kollegen

(56) Entgegenhaltungen:
- GB-A- 2 126 256
- GB-A- 2 344 600
- US-A- 4 565 719
- DATABASE WPI Section Ch, Week 199015 Derwent Publications Ltd., London, GB; Class A32, AN 1990-113453 XP002159490 & JP 02 066158 A (UNITIKA LTD), 6. März 1990 (1990-03-06)

## Beschreibung

Die Erfindung betrifft leitende transparente Schichten nach dem Oberbegriff des Patentanspruches 1 sowie ein Verfahren zur Herstellung dieser leitenden transparenten Schichten nach Patentanspruch 6.

Leitende transparente Schichten werden heute in der Displaytechnik, in der Optoelektronik sowie als Architekturglas vielfältig eingesetzt. Dabei wird einerseits eine möglichst hohe Transmission im sichtbaren Spektralbereich und andererseits eine möglichst hohe Leitfähigkeit beziehungsweise ein möglichst niederer Flächenwiderstand angestrebt. Als Mass für die Güte leitender transparenter Schichten kann der Haackesche Gütefaktor Φ_{TC} = T¹⁰/R_{S}, definiert in Journal of Applied Physics, Vol. 47, Seite 4086 bis 4089 (1976), verwendet werden. Dabei bedeuten T die optische Transmission der Schicht (als Bruchteil der auffallenden Strahlung) und R_{S} den Flächenwiderstand in Ω_{sq}. So besitzt beispielsweise eine Schicht mit einer Transmission von 90% und einem Flächenwiderstand von 3 Ω_{sq} einen Haackeschen Gütefaktor von 0,116 Ω⁻¹. Eine Schicht mit einer Transmission von 80% und einem Flächenwiderstand von 5 Ω_{sq} besitzt einen Gütefaktor von 0,021 Ω⁻¹.

Eine weitere wichtige Eigenschaft eines solchen Schichtsystems ist seine Ätzbarkeit. Diese hängt von seiner chemischen Zusammensetzung und seiner Dicke ab. Fur eine kurze Ätzzeit und gute Kantenschärfe ist es wichtig, dass die Schichtdicke möglichst klein ist, d.h. unter 100 nm beträgt.

Zur Erzielung hoher Gütefaktoren ist es vorteilhaft, Schichtsysteme aus oxidischen und metallischen Schichten zu kombinieren. So ist es bekannt, sehr dünne Silberschichten zwischen dünne Oxidschichten einzulagern. Durch die Einlagerung zwischen Oxidschichten wird die Silberschicht einerseits stabilisiert und geschützt, andererseits wird gleichzeitig ihre Reflexion vermindert und dadurch die Transmission erhöht. Diese Schichtkombinationen besitzen ferner den Vorteil einer geringen Gesamtschichtdicke, nämlich 100 nm oder weniger, verglichen mit einer Schicht aus Indium-Zinn-Oxid mit vergleichbarem Flächenwiderstand, die eine Dicke von über 500 nm aufweist (S. H. Shin und Koautoren, Thin Solid Films 341 (1999) 225 - 229). Damit können Ätzprozesse, wie sie bei der Herstellung von Displays üblich sind, schneller und mit geringerer Unterätzung hergestellt werden.

Solche Schichtsyteme sind z. B. beschrieben in: EP 0 599 071 A1, JP 10062602 A und im Artikel von K. K. Choi und Koautoren, Thin Solid Films 341 (1999) 152 - 155.

In der EP 0 599 071 A1 wird ein Schichtsystem mit der Schichtfolge Indium-Zinn-Oxid, Silber bzw. verschiedene Silberlegierungen, Indium-Zinn-Oxid beschrieben. Durch einstündige Temperung bei 300°C lassen sich Schichten mit einem Flächenwiderstand von 3,2 Ω_{sq} und gleichzeitig guter Transmission im sichtbaren Bereich herstellen. Für die Wellenlängen 435, 545 und 610 nm ergibt sich ein gemittelter Haackescher Gütefaktor von 0,066. Nachteilig ist jedoch die für Displayanwendungen nötige nachträgliche Temperaturbehandlung, da diese einen zusätzlichen Arbeitsschritt bedeutet.

In der JP 10062602 A wird ein ähnliches Schichtsystem beschrieben. Hier wird eine dünne Silberschicht mit mindestens 1,5 At.-% Goldbeimengung zwischen Oxidschichten, bestehend aus Zinnoxid und Indiumoxid sowie geringen Beimengungen anderer Oxide, eingebettet. Damit werden Schichten mit einem Flächenwiderstand von 4 - 20 Ω_{sq} und hoher Durchlässigkeit bei 550 nm erhalten. Die erhöhten Kosten durch die Goldbeimengung und der relativ hohe Flächenwiderstand müssen als Nachteile angesehen werden.

In Thin Solid Films 341 beschreiben K. K. Choi und Koautoren ein Schichtsystem bestehend aus Indium-Zinn-Oxid gefolgt von einer Silberschicht und als Deckschicht wiederum Indium-Zinn-Oxid. Zur Verbesserung der Leitfähigkeit werden die Schichten aus Indium-Zinn-Oxid bei 200°C, die Silberschicht jedoch bei Raumtemperatur abgeschieden. Doch durch die Erwärmung vor Abscheidung der zweiten Schicht aus Indium-Zinn-Oxid werden die Eigenschaften der Silberschicht bezüglich optischer Transmission und elektrischer Leitfähigkeit ungünstig beeinflusst. Im besten Fall wurden Schichten mit einem Flächenwiderstand von 4 Ω_{sq} und einer Transmission von 90% bei 550 nm erzielt.

Es ist weiterhin bekannt, dass bei spezieller Wahl der Materialien und Beschichtungsparameter transparente leitende Schichtsysteme mit 2,93 Ω_{sq} und Transmissionswerten (gegen Luft gemessen) von 89,2 % bei 435 nm, 92,4 % bei 545 nm und 82,2 % bei 610 nm mit einer Gesamtschichtdicke von 86,5 nm hergestellt werden können. Dieser transparente Leiter besitzt für die drei genannten Wellenlängen einen mittleren Haackeschen Gütefaktor von 0,104 Ohm⁻¹.

Im Displaybereich für grossflächige flache LCD-Displays oder Computermonitore mit Bilddiagonalen vorzugsweise über 17'' werden nun transparente Elektroden mit noch niedererem Flächenwiderstand bei gleichzeitig hoher Durchlässigkeit im sichtbaren Bereich, d. h. einem hohem Haackeschem Gütefaktor, benötigt. Dies ist durch die Bildgrösse, die hohe Auflösung und Pixelzahl sowie die höhere Geschwindigkeit dieser Displays bedingt. Diese Anforderungen können mit den bisher bekannten Verfahren nicht mehr erfüllt werden.

Die vorliegende Erfindung macht sich zur Aufgabe, die Nachteile des Standes der Technik zu beheben, insbesondere einen noch niedereren Flächenwiderstand bei einem hohen Haackeschen Gütefaktor zu erreichen.

Diese Aufgabe wird gelöst durch ein Schichtsystem nach Anspruch 1 sowie durch ein Verfahren nach Anspruch 6. Die abhängigen Patentansprüche beschreiben weitere bevorzugte Ausführungen der Erfindung.

Ein erfindungsgemässes Schichtsystem nach Anspruch 1 umfasst mindestens 2 Oxidschichten und eine dazwischen gelagerte Silberschicht und weist einen Flächenwiderstand von weniger als 2,9 Ω_{sq}, vorzugsweise 2,5 Ω_{sq} und geringer auf, bei einem über die Wellenlängen 435, 545 und 610 nm gemittelten Haackeschen Gütefaktor von grösser als 0,085 Ω^{-1.}

Dabei ist es aus Gründen der Farbneutralität günstig, wenn bei einem Flächenwiderstand von 2,5 Ω_{sq} die optische Transmission bei 435 nm mindestens 89 %, bei 545 um mindestens 88 % und bei 610 nm mindestens 75 % beträgt. Damit ist gewährleistet, dass die Beschichtung in Durchsicht möglichst neutral erscheint.

Besonders gute Ergebnisse werden erzielt, wenn die Dicke der beiden Oxidschichten vorteilhafterweise unter 50 nm, vorzugsweise zwischen 30 und 40 nm, und die Dicke der Silberschicht unter 20 nm, vorzugsweise bei 15 nm, gewählt wird.

Die Entspiegelungswirkung der Oxidschichten wird besonders gut, wenn die Oxidschicht neben Indium 5 bis 10 At.-% Cer enthält.

Die Stabilität der Silberschicht wird durch Beigabe von bis zu 10 Gew.-% Kupfer erhöht. Besonders wirksam zeigten sich Beigaben von 0,5 bis 3 % und insbesondere 0,5 bis 1 %.

Bei der Herstellung des beschriebenen Schichtsystems ist es entscheidend, wie in Anspruch 6 und weiteren abhängigen Ansprüchen beschrieben, dass die Aufbringung der zweiten Oxidschicht nicht mit reiner DC-Zerstäubung, sondern mit einer gepulsten DC-Zerstäubung oder mit einer AC-überlagerten DC-Zerstäubung erfolgt. Die AC-Überlagerung wird beispielsweise dadurch erzeugt, dass das Ausgangssignal über ein Filter auf die mit einer DC-Stromversorgung gespeiste Sputterquelle eingekoppelt wird. Eine weitere Möglichkeit besteht beispielsweise auch darin, die DC-Stromversorgung entsprechend zu modulieren oder zu takten (choppern). Es sind also verschiedene Modulationen möglich.

Die AC-Frequenz sollte zwischen 1 und 50 MHz, vorzugsweise zwischen 10 und 20 MHz, liegen, um besonders gute Ergebnisse zu erreichen.

Im Weiteren wird mit Vorteil der AC-Anteil, definiert durch das Verhältnis der eingespeisten DC- und AC-Leistung, zwischen 10 und 90 %, vorzugsweise zwischen 30 und 50 %, eingestellt.

Besonders geeignet erwies sich eine totale Leistungsdichte (AC und DC) von 1 bis 3 W/cm², vorzugsweise von 2 bis 2,2 W/cm².

Als Zerstäubungsmethode wird Magnetronsputtern bevorzugt.

Die Vorteile dieses Verfahrens können wie folgt zusammengefasst werden:

Durch die Erhaltung der guten Leitfähigkeit der dünnen Silberschicht durch die Art der Aufbringung der zweiten Oxidschicht kann die optische Transmission hoch gehalten werden. Ohne das erfindungsgemässe Vorgehen müsste zur Erzielung dieser Leitfähigkeit die Dicke der Silberschicht erhöht werden, was unvermeidlich zu einer deutlicheren Verringerung der Transmission und damit zu einer wesentlichen Verschlechterung des Haackeschen Gütefaktors führen würde.

Die Herstellung solcher Schichten an Hand des erfindungsgemässen Verfahrens soll nun an dem nachfolgenden Beispiel beschrieben werden.

Die Glas-Substrate aus herkömmlichem dünnen Floatglas oder Maschinenglas werden in herkömmlicher Weise gereinigt und dann in eine Zerstäubungsanlage eingebracht. Die Vakuumkammer wird abgepumpt und nach Erreichung des nötigen Vakuums mit der Aufstäubung der ersten Oxidschicht aus Indium- und Ceroxid begonnen. Diese Oxidschicht wird teilreaktiv von einem Oxidtarget abgestäubt, d. h. in einer Argonatmosphäre von ca. 2,2x10⁻³ hPa mit einer Beimischung von Sauerstoff von maximal 5 %. Dieser Zerstäubungsprozess ist ein reiner DC-Prozess. Typische Zerstäubungsraten sind 5 bis 8 nm×m/min×cm²W. Anschliessend erfolgt als reiner nicht-reaktiver DC-Prozess das Aufstäuben der Silberschicht. Hier liegen die typischen Zerstäubungsraten bei 12 bis 15 nm×m/min×cm²/W. Ihm schliesst sich das Aufstäuben der zweiten Oxidschicht mit einer AC-überlagerten DC-Zerstäubung an. Dabei liegt der AC-Anteil, definiert durch das Verhältnis der eingespeisten DC- und AC-Leistung, zwischen 30 und 50 %. Die AC-Frequenz liegt bei 13,56 MHz. Nach Beendigung des Zerstäubungsprozesses werden die beschichteten Gläser durch eine Schleuse oder durch Fluten der Kammer an Luft ausgebracht. In einem anschliessenden Ätzprozess werden die Substrate dann strukturiert und zu Displays weiterverarbeitet.

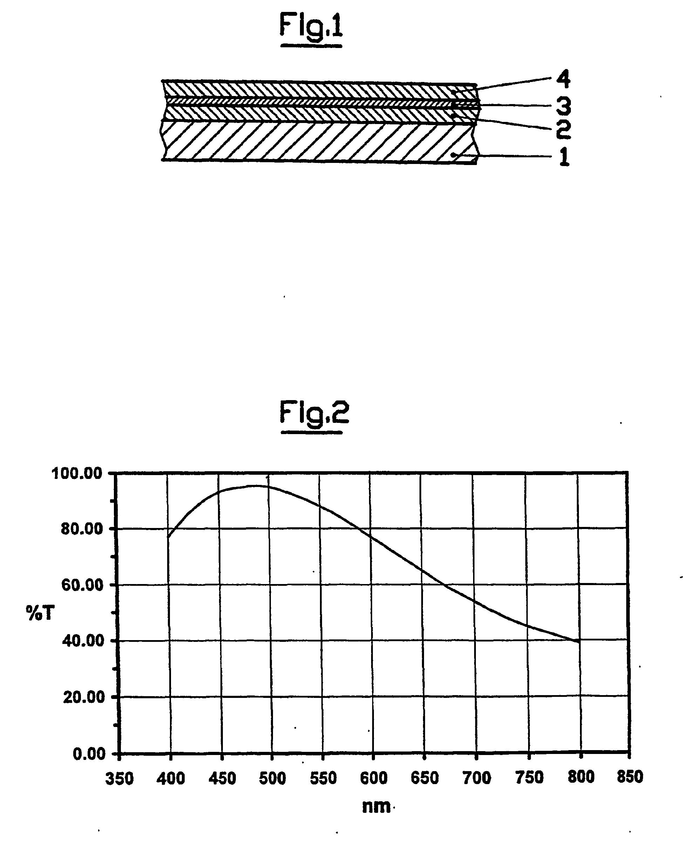

Im folgenden ist die Erfindung in den Figuren 1 und 2 an Hand von Ausführungsbeispielen erläutert.
- Fig. 1: zeigt schematisch und im Querschnitt ein erfindungsgemässes Schichtsystem.
- Fig. 2: zeigt die im sichtbaren Spektralbereich gegen Luft gemessene optische Transmission eines erfindungsgemässen Schichtsystems mit einem Flächenwiderstand von 2,5 Ω_{sq}.

In der Fig. 1 bedeuten 1 das Glassubstrat, auf welches das erfindungsgemässe Schichtsystem aufgebracht wird, 2 eine Indium-Cer-Oxidschicht, 3 eine Kupfer-dotierte Silber-Schicht, und 4 eine abschliessende Indium-Cer-Oxidschicht.

Das Glassubstrat 1 ist z. B. ein handelsübliches Floatglas mit 1,1 mm Dicke. Es können aber auch andere Glasdicken und andere Gläser, z. B. Maschinenglas, benützt werden.

Darauf wird durch teilreaktive DC-Zerstäubung von einem Oxidtarget, bestehend aus vorzugsweise 90 bis 95 At.-% Indium und 5 bis 10 At.-% Cer, eine Oxidschicht 2 mit der geometrischen Dicke von 30 bis 37 nm abgeschieden.

Auf diese Oxidschicht 2 wird eine Silberschicht 3 mit 0,5 bis 10 % Kupfer-Beimengung, vorzugsweise 0,5 bis 3% und insbesondere 0,5 bis 1% Kupfer, in einem reinen DC-Zerstäubungsprozess in einer Argonatmosphäre in einer Dicke von 15 nm aufgebracht.

Auf die Schicht 3 aus Silber/Kupfer wird direkt eine zweite Indium-Cer-Oxidschicht 4, ebenfalls mit der geometrischen Dicke von 30 bis 37 nm, abgeschieden. Dies erfolgt jedoch mit einem AC-überlagerten DC-Zerstäubungsprozess. Dabei liegt der AC-Anteil, definiert durch das Verhältnis der eingespeisten DC- und AC-Leistung, zwischen 10 und 90 %, vorzugsweise zwischen 30 und 50 %. Die AC-Frequenz liegt zwischen 1 und 50 MHz, vorzugsweise zwischen 10 und 20 MHz.

Optional kann nach der Silber/Kupfer-Schicht eine Schutzschicht aus Oxiden von Titan- oder Nickellegierungen mittels DC-Magnetron-Zerstäubung aufgebracht werden.

In der Fig. 2 ist die optische Durchlässigkeit (gemessen gegen Luft) eines erfindungsgemässen Schichtsystems mit einem Flächenwiderstand von 2,5 Ω_{sq} in Abhängigkeit von der Wellenlänge im Spektralbereich 400 bis 800 nm dargestellt. Bei 435 nm werden 89,8 %, bei 545 nm 88,4 % und bei 610 nm 75,4 % erreicht. Der über diese drei Wellenlängen gemittelte Haackesche Gütefaktor beträgt 0,092 Ω⁻¹.

## Patentansprüche

1. Leitendes transparentes Schichtsystem mit zwei Oxidschichten (2,4) und einer dazwischen gelagerten Silber-Schicht (3) auf einem Substrat (1), **dadurch gekennzeichnet, dass** die zweite Oxidschicht (4) durch eine gepulste DC-Zerstäubung oder eine AC-überlagerte DC-Zerstäubung auf die Silber-Schicht (3) aufgebracht wird, so dass der Flächenwiderstand Rₛ < 2,9 Ω_{sq}., vorzugsweise < 2,5 Ω_{sq} und weniger beträgt, und damit ein mittlerer Haackescher Gütefaktor des Schichtsystems von (Φ_{TC}=T¹⁰/Rₛ) > 0,085 Ω⁻¹ für die Wellenlängen 435, 545 und 610 nm erreicht wird.

2. Schichtsystem nach Anspruch 1, **dadurch gekennzeichnet, dass** bei einem Flächenwiderstand von 2,5 Ω_{sq} die Durchlässigkeit T bei 435 nm mindestens 89 %, bei 545 nm mindestens 88 % und bei 610 nm mindestens75%beträgt.

3. Schichtsystem nach einem der vorangehenden Ansprüche, **dadurch gekennzeichnet, dass** die Dicke des Schichtsystems < 100 nm, vorzugsweise 80 bis 90 nm beträgt, wobei die Dicke der Silberschicht (3) bei < 20 nm, vorzugsweise bei 15 nm, und die Dicke der beiden Oxidschichten (2,4) bei < 50 nm, vorzugsweise zwischen 30 und 40 nm, liegt.

4. Schichtsystem nach einem der vorangehenden Ansprüche, **dadurch gekennzeichnet, dass** die Oxidschichten (2,4) Indium und Cer enthalten, vorzugsweise 90 bis 95 At.-% Indium und 5 bis 10 At.-% Cer.

5. Schichtsystem nach einem der vorangehenden Ansprüche, **dadurch gekennzeichnet, dass** die Silber-Schicht (3) bis zu 10 Gew.-% Kupfer enthält, vorzugsweise im Bereich 0.5 bis 3 % und insbesondere 0,5 bis 1%.

6. Verfahren zur Herstellung eines leitenden transparenten Schichtsystems nach einem der vorangehenden Ansprüche, **dadurch gekennzeichnet, dass** bei der Aufbringung der zweiten Oxidschicht (4) eine gepulste DC-Zerstäubung oder eine AC-überlagerte DC-Zerstäubung verwendet wird.

7. Verfahren nach Anspruch 6, **dadurch gekennzeichnet, dass** eine AC-Überlagerung mit einer Frequenz zwischen 1 und 50 MHz, vorzugsweise zwischen 10 und 20 MHz vorgenommen wird.

8. Verfahren nach Anspruch 6 und 7, **dadurch gekennzeichnet, dass** der AC-Anteil, definiert durch das Verhältnis der eingespeisten DC- und AC-Leistung, zwischen 10 und 90 %, vorzugsweise zwischen 30 und 50 % liegt.

9. Verfahren nach Anspruch 6, 7 und 8, **dadurch gekennzeichnet, dass** die totale Leistungsdichte (AC und DC) im Bereich 1 bis 3 W/cm², vorzugsweise aber bei 2 bis 2.2 W/cm² liegt.

10. Verfahren nach Anspruch 6 bis 9, **dadurch gekennzeichnet, dass** als Zerstäubungsverfahren Magnetronzerstäubung gewählt wird.

11. Verwendung des leitenden transparenten Schichtsystems nach Anspruch 1 bis 5 als transparente Elektrode für grossflächige Displays, wobei es nach dem Verfahren nach den Ansprüchen 6 bis 10 gefertigt wurde.

## Claims

1. Conductive transparent layer system with two oxide layers (2, 4) and a silver layer (3) located therebetween on a substrate (1), **characterised in that** the second oxide layer (4) is applied by a pulsed DC sputtering or an AC-superimposed DC sputtering on the silver layer (3), so that the surface resistance is Rₛ < 2.9 Ω_{sq}., preferably < 2.5 Ω_{sq} and less, and hence an average Haack's quality factor of the layer system of Ω_{TC} = T¹⁰/Rₛ) > 0.085 Ω⁻¹ for the wavelengths 435, 545 and 610 nm is achieved.

2. Layer system according to claim 1, **characterised in that**, at a surface resistance of 2.5 Ω_{sq}, the permeability T at 435 nm is at least 89%, at 545 nm at least 88% and at 610 nm at least 75%.

3. Layer system according to one of the preceding claims, **characterised in that** the thickness of the layer system is < 100 nm, preferably 80 to 90 nm, the thickness of the silver layer (3) being at < 20 nm, preferably at 15 nm, and the thickness of the two oxide layers (2, 4) being at < 50 nm, preferably between 30 and 40 nm.

4. Layer system according to one of the preceding claims, **characterised in that** the oxide layers (2, 4) contain indium and cerium, preferably 90 to 95 at.% indium and 5 to 10 at.% cerium.

5. Layer system according to one of the preceding claims, **characterised in that** the silver layer (3) contains up to 10% by wt. copper, preferably in the range 0.5 to 3% and in particular 0.5 to 1%.

6. Method for the production of a conductive transparent layer system according to one of the preceding claims, **characterised in that**, during the application of the second oxide layer (4), a pulsed DC sputtering or an AC-superimposed DC sputtering is used.

7. Method according to claim 6, **characterised in that** an AC-superimposition with a frequency between 1 and 50 MHz, preferably between 10 and 20 MHz, is undertaken.

8. Method according to claim 6 and 7, **characterised in that** the AC proportion, defined by the ratio of the supplied DC and AC power, is between 10 and 90%, preferably between 30 and 50%.

9. Method according to claim 6, 7 and 8, **characterised in that** the total power density (AC and DC) is in the range 1 to 3 W/cm², preferably however at 2 to 2.2 W/cm².

10. Method according to claim 6 to 9, **characterised in that** magnetron sputtering is chosen as sputtering method.

11. Use of the conductive transparent system according to claim 1 to 5 as transparent electrode for large-area displays, said system having been produced according to the method according to claims 6 to 10.

## Revendications

1. Système de couches transparentes et conductrices comprenant, sur un substrat (1), deux couches d'oxyde (2, 4) et une couche d'argent (3) placée entre ces deux couches d'oxyde,
**caractérisé en ce que** la deuxième couche d'oxyde (4) est appliquée, sur la couche d'argent (3), par une pulvérisation cathodique pulsée en courant continu (CC) ou par une pulvérisation cathodique en courant continu (CC) superposée en courant alternatif (CA), de sorte que la résistance de surface Rₛ est < 2,9 Ω_{sq}, de préférence < 2,5 Ω_{sq} et inférieure à cette valeur et, par conséquent, un facteur de qualité Haacke du système de couches, de valeur moyenne, de (Φ_{TC} = T¹⁰/Rₛ) > 0,085 Ω⁻¹, pour les longueurs d'ondes de 435 nm, 545 nm et 610 nm, est atteint.

2. Système de couches selon la revendication 1, **caractérisé en ce que**, dans le cas d'une résistance de surface de 2,5 Ω_{sq}, la transparence T à environ 435 nm est d'au moins 89 %, à environ 545 nm d'au moins 88 % et à environ 610 nm d'au moins 75 %.

3. Système de couches selon l'une des revendications précédentes, **caractérisé en ce que** l'épaisseur du système de couches est < 100 nm, de préférence de 80 nm à 90 nm, l'épaisseur de la couche d'argent (3) étant < 20 nm environ, de préférence de 15 nm environ, l'épaisseur des deux couches d'oxyde (2, 4) étant < 50 nm environ, de préférence entre 30 nm et 40 nm.

4. Système de couches selon l'une des revendications précédentes, **caractérisé en ce que** les couches d'oxyde (2, 4) contiennent de l'indium et du cérium, de préférence de 90 % à 95 % d'atomes d'indium et de 5 % à 10 % d'atomes de cérium.

5. Système de couches selon l'une des revendications précédentes, **caractérisé en ce que** la couche d'argent (3) contient jusqu'à 10 % en poids de cuivre, de préférence dans la plage comprise entre 0,5 % et 3 % et, en particulier, entre 0,5 % et 1 %.

6. Procédé de fabrication d'un système de couches transparentes conductrices selon l'une des revendications précédentes, **caractérisé en ce que**, lors de l'application de la deuxième couche d'oxyde (4), l'on utilise une pulvérisation cathodique pulsée en courant continu (CC) ou une pulvérisation cathodique en courant continu (CC) superposée en courant alternatif (CA).

7. Procédé selon la revendication 6, **caractérisé en ce que** l'on procède à une superposition en courant alternatif (CA) à une fréquence comprise entre 1 MHz et 50 MHz, de préférence entre 10 MHz et 20 MHz.

8. Procédé selon les revendications 6 et 7, **caractérisé en ce que** la proportion de courant alternatif (CA), définie par le rapport de la puissance appliquée de courant continu (CC) et de courant alternatif (CA), est comprise entre 10 % et 90 %, de préférence entre 30 % et 50 %.

9. Procédé selon les revendications 6, 7 et 8, **caractérisé en ce que** la puissance volumique totale (CA et CC) est dans la plage comprise entre 1 W/cm² et 3 W/cm², mais de préférence entre 2 W/cm² environ et 2,2 W/cm².

10. Procédé selon les revendications 6 à 9, **caractérisé en ce que** l'on choisit comme procédé de pulvérisation cathodique, une pulvérisation cathodique magnétron.

11. Utilisation du système de couches transparentes conductrices selon les revendications 1 à 5 comme électrode transparente pour des écrans de visualisation de grande taille, la fabrication ayant été réalisée d'après le procédé selon les revendications 6 à 10.
